(19) Europäisches Patentamt
European Patent Office
Office européen des brevets

(11) EP 3 744 724 B1

(12) **EUROPEAN PATENT SPECIFICATION**

(45) Date of publication and mention of the grant of the patent:
**31.05.2023 Bulletin 2023/22**

(21) Application number: **18902554.7**

(22) Date of filing: **25.01.2018**

(51) International Patent Classification (IPC):
***C07F 9/38*** (2006.01) ***C08K 5/5317*** (2006.01)
***C08K 5/5353*** (2006.01) ***C08L 23/12*** (2006.01)
***C08L 67/02*** (2006.01) ***C08L 77/06*** (2006.01)
***D21H 19/46*** (2006.01) ***D21H 21/34*** (2006.01)
***B27K 3/36*** (2006.01)

(52) Cooperative Patent Classification (CPC):
(C-Sets available)
**C07F 9/3821; B27K 3/36; C08K 5/5353; C08L 23/12; C08L 67/02; D21H 19/46; D21H 21/34;** B27K 2240/30 (Cont.)

(86) International application number:
**PCT/CN2018/074075**

(87) International publication number:
**WO 2019/144331 (01.08.2019 Gazette 2019/31)**

(54) **ALUMINUM AMINO TRIMETHYLENE PHOSPHONATE, PREPARATION METHOD THEREFOR AND USE THEREOF**

ALUMINIUMAMINOTRIMETHYLENPHOSPHONAT, HERSTELLUNGSVERFAHREN DAFÜR UND VERWENDUNG DAVON

PHOSPHONATE D'ALUMINIUM AMINOTRIMÉTHYLÈNE, SON PROCÉDÉ DE PRÉPARATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2018 CN 201810069414**

(43) Date of publication of application:
**02.12.2020 Bulletin 2020/49**

(73) Proprietor: **Kingfa Sci. & Tech. Co., Ltd.**
**Guangzhou, Guangdong 510663 (CN)**

(72) Inventors:
- **CHAI, Shengyong**
**Guangzhou Hi-tech Industrial Development Zone**
**Guangzhou, Guangdong 510663 (CN)**
- **CHEN, Lin**
**Guangzhou Hi-tech Industrial Development Zone**
**Guangzhou, Guangdong 510663 (CN)**
- **LI, Jide**
**Guangzhou Hi-tech Industrial Development Zone**
**Guangzhou, Guangdong 510663 (CN)**
- **LIU, Qin**
**Guangzhou Hi-tech Industrial Development Zone**
**Guangzhou, Guangdong 510663 (CN)**
- **LIU, Zhenfeng**
**Guangzhou Hi-tech Industrial Development Zone**
**Guangzhou, Guangdong 510663 (CN)**
- **LI, Yan**
**Guangzhou Hi-tech Industrial Development Zone**
**Guangzhou, Guangdong 510663 (CN)**
- **LI, Kunquan**
**Guangzhou Hi-tech Industrial Development Zone**
**Guangzhou, Guangdong 510663 (CN)**

(74) Representative: **Horn Kleimann Waitzhofer Patentanwälte PartG mbB**
**Ganghoferstraße 29a**
**80339 München (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**CN-A- 103 170 082**
**CN-A- 104 119 557**
**CN-A- 104 497 041**
**CN-A- 106 632 468**
**RU-C1- 2 477 734**

- **CABEZA AURELIO ET AL: "Two New Organo-Inorganic Hybrid Compounds: Nitrilophosphonates of Aluminum and Copper", JOURNAL OF SOLID STATE CHEMISTRY, vol. 160, no. 1, 1 August 2001 (2001-08-01), pages 278-286, XP055831695, US ISSN: 0022-4596, DOI: 10.1006/jssc.2001.9246 Retrieved from the Internet: URL:https://www.sciencedirect.com/science/article/pii/S0022459601992461/pdf?md5=5fa0c6af4992cd7c5190b881dbf01e90&pid=1-s2.0-S0022459601992461-main.pdf>**

(52) Cooperative Patent Classification (CPC): (Cont.)

C-Sets
**C08K 5/5353, C08L 23/12;**
**C08K 5/5353, C08L 67/02;**
**C08K 5/5353, C08L 77/06**

## Description

### TECHNICAL FIELD

The present invention relates to the field of synthesis technology of flame retardant, and specifically relates to an aluminum aminotrimethylenephosphonate and a preparation method and use thereof.

### BACKGROUND

Due to the characteristics of light weight and easy processing and molding, the macromolecular materials are widely used in production and lives. However, most of the macromolecular materials are inflammable, and poison gas is generated during their combustion, and thus severe fire risk exists. In such circumstances, it becomes especially important to carry out a flame retardant modification for the macromolecular materials. Conventional flame retardants for the macromolecular materials are as follows: halogen-based, phosphorus-based, nitrogen-based, aluminum-magnesium-based, clay-based, boron-based, tin-based, expanded, silicon-based, and etc. The flame-retardant macromolecular materials at present are mainly added with a brominated flame retardant in huge dosage. Although efficient flame-retardant effect can also be guaranteed with less dosage, poison and corrosive dense smoke is resulted which does great harm to the environment and human's health. Therefore, various countries in the world engage more in the development of a halogen-free flame retardant, wherein a halogen-free phosphorous-nitrogen flame retardant is one of the solutions. Under high temperature, the halogen-free phosphorous-nitrogen flame retardant forms a compact carbon layer on a surface of the macromolecular material to isolate oxygen and heat, and also less smoke is resulted, without poison gas but with good flame retardant effect.

Conventional flame retardants for wood are as follows: phosphorous-nitrogen flame retardant, boron-based flame retardant, halogen flame retardant, metallic oxides or hydroxides of aluminum, magnesium and antimony. Different types of flame retardants have different flame-retardant mechanisms, and generally a complex formulation of several types of flame retardants is used. Based on the development tendency of flame retardants for wood at home and abroad, a long-acting flame retardant with low toxicity, less pollution, less moisture absorption and loss-resistance, and a multi-functional flame retardant which is mould proof and insect-resistant with dimensional stability, are progressed in research and development. In practical use, in addition to the flame-retardant effect and the properties above, effect of flame-retardant treatment on the physical and mechanical properties such as strength of the wood or bonding strength of the plywood should also be taken into account. Moreover, cost is one of the factors that matters.

Paper is generally made from plant fiber which is an inflammable substance. With the development of society, flame-retardant paper using plant fiber as the main raw material is used in more and more fields, such as flame-retardant packaging paper and paper board, flame-retardant decorative paper, flame-retardant filter paper for automobile. Thus, research of the flame resistance of the plant fiber paper has become a hotspot in the field of specialty paper. Method of adding a flame retardant is usually used to prepare a flame-retardant plant fiber paper at present. For example, a water-insoluble flame retardant is added to the pulp to make flame-retardant paper, or surface sizing, coating or dipping is used to make the paper flame-retardant. At present, drawbacks in the flame-retardant paper produced in our country lie in large dosage of flame retardant, using halogen flame retardant and easy moisture absorption.

The phosphorous-containing flame retardants are usually used with the nitrogen flame retardants in complex formulation. In patent CN1660857B, melamine polyphosphate is used as a synergist with a flame retardant, aluminum diethylphosphinate. The complex synergistic flame retardant works intermolecularly, and a synergistic effect between the phosphorous and nitrogen intramolecularly draws attention from the chemists. Poly(ammonium phosphate), also called as ammonium polyphosphate or polycondensed ammonium phosphate (APP in short), is a phosphorous-nitrogen flame retardant with excellent performance, having relatively high contents of phosphorous and nitrogen and a P-N synergistic effect intramolecularly. Patent CN104497041A discloses a compound having a structure shown as formula (II), wherein each aminotrimethylene phosphonic acid provides three monovalent anions, and with melamine forms a salt of melamine aminotrimethylene phosphonic acid. Patent CN106632468A discloses a compound having a structure shown as formula (III), wherein each aminotrimethylene phosphonic acid provides one monovalent anion, and reacts with a metallic salt to obtain a metallic salt of aminotrimethylene phosphonic acid. Although these two compounds have certain flame resistance, deficiencies like large addition amount, low flame-retardant efficiency and low char yield still exist.

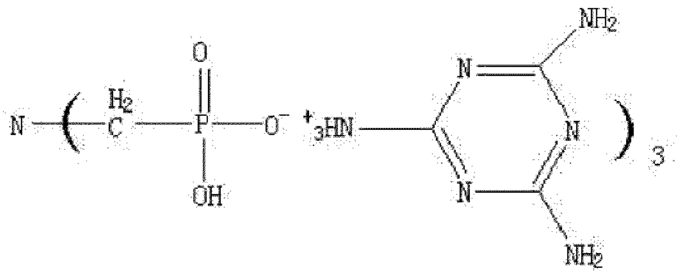

(II)

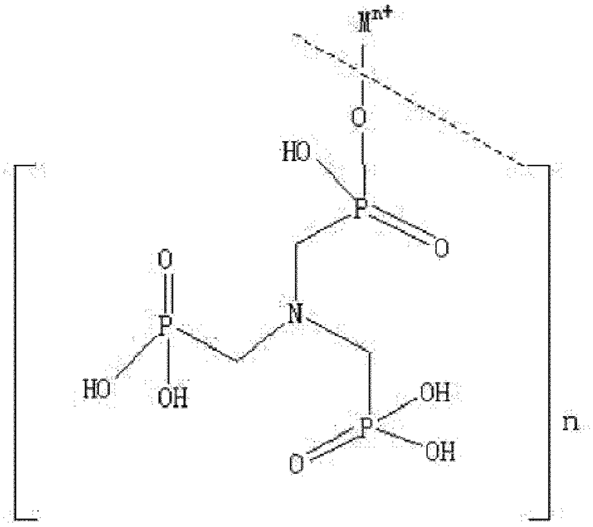

n= (1, 2, 3)

(III)

RU 2 477 734 C1 discloses non-flammable foam materials used in the fields of aircraft and mechanical engineering. Aluminium containing nitrilotrimethylphosphonate is mentioned as a fire retardant.

SUMMARY

The present invention is defined in the claims.

In order to solve the above deficiencies of the prior art, by a reaction of aminotrimethylene phosphonic acid or of an aqueous solution of an acidic salt of the aminotrimethylene phosphonic acid with a metal compound or an aqueous solution thereof at different pH values to synthesize a series of aminotrimethylenephosphonates, the present disclosure obtains a compound having a structure shown as formula (IV):

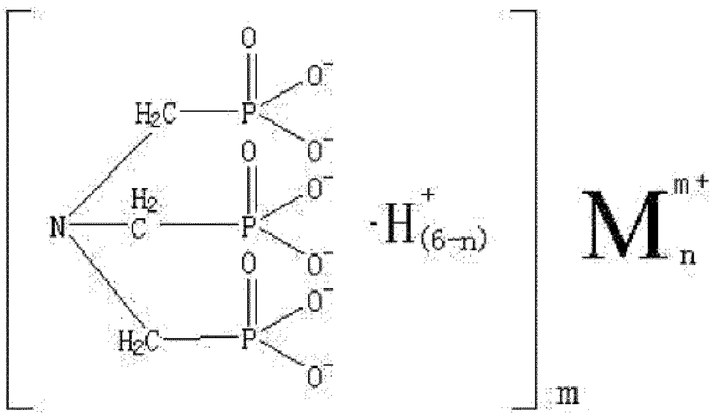

(IV)

wherein, n is from 1 to 6;

M is selected from a group consisting of Mg, Ca, Al, Sb, Sn, Ge, Ti, Zn, Fe, Zr, Ce, Bi, Sr and Mn, and m is from 2 to 3. When a ratio of n to m is an integer, the compound is deemed as molecules in integer number.

In the molecular structure of the compound (IV), each aminotrimethylene phosphonic acid provides one to six monovalent anions which react with the metallic cations.

Through massive synthesis and sieving researches of flame-retardant performances, it is found that aluminum aminotrimethylenephosphonate having a structure shown as formula (I) has the best flame-retardant effect, with advantages of high content of phosphorous, good thermal stability, high char yield and being environmental friendly without halogen. By adjusting a pH value of aminotrimethylene phosphonic acid or of an aqueous solution of an acidic salt of the aminotrimethylene phosphonic acid to 3 - 9 with an aqueous solution of an alkali compound, to obtain an metal salt solution of the aminotrimethylene phosphonic acid, and then performing a reaction of the metal salt solution of aminotrimethylene phosphonic acid with an aluminum metal compound or an aqueous solution thereof, thus a compound with structure (I), an aluminum aminotrimethylenephosphonate, is obtained. The structural characteristic thereof lies in that each aminotrimethylene phosphonic acid provides four monovalent anions, and a stable chemical structure is formed by three aminotrimethylene phosphonic acids and four trivalent metallic aluminum ions.

A primary objective of the present invention is to provide the aluminum aminotrimethylenephosphonate as defined in the claims.

The present invention is realized by the following technical solutions:
An aluminum aminotrimethylenephosphonate, has a structure shown as formula

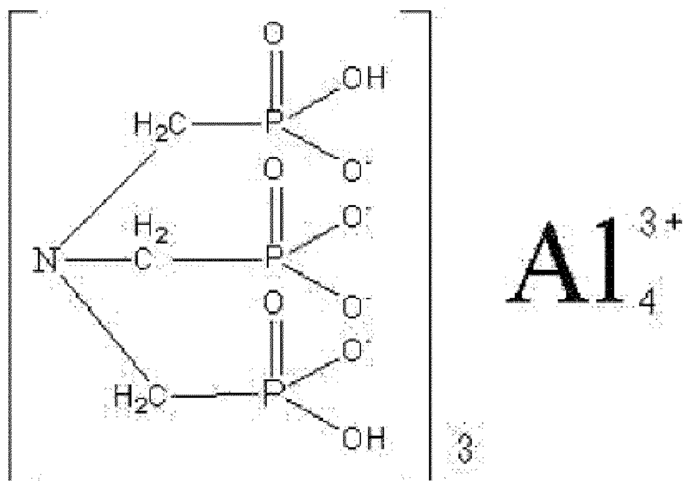

(I)

(I):

The aluminum aminotrimethylenephosphonate has a particle size (D50) of 5 μm100 μm.

The particle size (D50) of the aluminum aminotrimethylenephosphonate is measured as follows:
Particle size distribution of the aluminum aminotrimethylenephosphonate in a liquid phase is measured via a laser particle sizer by the following operations: according to the particle size of the aluminum aminotrimethylenephosphonate, adding 0.05 g - 1.0 g of sample of the aluminum aminotrimethylenephosphonate into a beaker, adding ethyl alcohol and water, followed by ultrasonic dispersion or stirring dispersion to form a dispersion liquid, and pouring the dispersion liquid in the laser particle sizer to measure the particle size distribution of the aluminum aminotrimethylenephosphonate.

The aluminum aminotrimethylenephosphonate has a bulk density of 0.4 g/cm$^3$ - 0.9 g/cm$^3$ which is measured referring to GB/T 20316.2 *Determination of Bulk Density.*

The aluminum aminotrimethylenephosphonate has an angle of repose of 25° - 45°. A test method for the angle of repose of the aluminum aminotrimethylenephosphonate is as follows: pouring a powder sample into a funnel so that the powder sample falls through the funnel on a round plate having a diameter r below the funnel, with the powder being piled gradually until the powder no longer reaches higher, measuring a piled height h of the powder, and calculating the angle of repose $\alpha$ according to the following formula (1): tg $\alpha$=h/r (1).

The present invention also provides a preparation method for the aluminum aminotrimethylenephosphonate, comprising the following steps:

a) adjusting a pH value of aminotrimethylene phosphonic acid or of an aqueous solution of an acidic salt of the aminotrimethylene phosphonic acid to 3 - 9 with an aqueous solution of an alkali compound, to obtain an alkali metal salt solution of the aminotrimethylene phosphonic acid;
b) performing a reaction of the alkali metal salt solution of aminotrimethylene phosphonic acid with an aluminum metal compound or an aqueous solution thereof to obtain aluminum aminotrimethylenephosphonate.

In step a), the alkali compound is sodium hydroxide, potassium hydroxide, sodium carbonate, potassium carbonate, sodium acetate or potassium acetate.

In step a), the acidic salt of the aminotrimethylene phosphonic acid is monosodium aminotrimethylenephosphonate, disodium aminotrimethylenephosphonate, trisodim aminotrimethylenephosphonate, tetrasodium aminotrimethylenephosphonate, monopotasium aminotrimethylenephosphonate, dipotasium aminotrimethylenephosphonate, tripotasium aminotrimethylenephosphonate, tetrapotasium aminotrimethylenephosphonate, or any combinations thereof.

In step b), the aluminum metal compound is aluminum sulfate, aluminum chloride, aluminum acetate, aluminum nitrate, aluminum hydroxide, aluminum oxide, or any combinations thereof.

The present invention also provides use of the aluminum aminotrimethylenephosphonate according to the above as a flame retardant in macromolecular materials, wood or paper.

The present invention also provides a flame retardant composition comprising the aluminum aminotrimethylenephosphonate according to the above.

The flame retardant composition of the present invention comprises 10% - 99.9% by weight of the aluminum aminotrimethylenephosphonate according to the above and 0.1% - 90% by weight of at least one additive.

Preferably, the flame retardant composition of the present invention comprises 20% - 70% by weight of the aluminum aminotrimethylenephosphonate according to the above and 30% - 80% by weight of at least one additive.

The additive of the present invention is selected from one or more of aluminum diethylphosphinate, aluminum dipropylphosphinate, aluminum dibutylphosphinate, aluminum ethylbutylphosphinate and/or aluminum hypophosphite.

The additive of the present invention is selected from one or more of piperazine pyrophosphate, piperazine polyphosphate, melamine pyrophosphate, melamine polyphosphate, melamine cyanurate, guanidine and dicyandiamide.

The present invention also provides a flame-retardant macromolecular material comprising the flame retardant composition according to the above.

The flame-retardant macromolecular material of the present invention comprises 1% - 50% by weight of the flame retardant composition according to the above, 30% - 99% by weight of a polymer or a mixture thereof, 0% - 60% by weight of a promoter, and 0% - 60% by weight of a filler.

Preferably, the flame-retardant macromolecular material of the present invention comprises 5% - 30% by weight of the flame retardant composition according to the above, 40% - 95% by weight of the polymer or the mixture thereof, 0% - 40% by weight of the promoter, and 0% - 40% by weight of the filler.

The polymer of the present invention is selected from one or more of a thermoplastic polymer and/or a thermoset polymer. The thermoplastic polymer is a polyester, a polyamide or a polyolefin, preferably nylon 66 (PA66), polybutylene terephthalate (PBT) or polypropylene (PP).

Compared with the prior art, the present invention has the following beneficial effects:

(1) The aluminum aminotrimethylenephosphonate prepared by the present invention has a high content of phosphorous, and advantages like good thermal stability, high flame-retardant efficiency, high char yield and being environmental friendly without halogen. It can be widely used in the fields of macromolecular materials, wood, and paper, as a phosphorous-nitrogen flame retardant.

(2) The compound of the present invention has a stable molecular structure, wherein each aminotrimethylene phosphonic acid provides four monovalent anions to form a salt with the aluminum ions.

(3) The raw materials of the present invention are easy to obtain, and a synthesis technology in the present invention is simple with high yield and being convenient for industrial production.

DETAILED DESCRIPTION

The present invention is further described by the specific implementations as follows, and the following examples are preferable implementations of the present invention. However, the implementations of the present invention are not limited to the following examples. Non-substantial modifications and adjustment made to the present invention by those skilled in the art according to the description of the present invention are still within the scope of protection of the present invention. A test method for measuring a particle size of an aluminum aminotrimethylenephosphonate is as follows:
Particle size distribution of the aluminum aminotrimethylenephosphonate in a liquid phase is measured via a laser particle sizer by the following operations: according to the particle size of the aluminum aminotrimethylenephosphonate, adding 0.05 g - 1.0 g of sample of the aluminum aminotrimethylenephosphonate into a beaker, adding ethyl alcohol and water, followed by ultrasonic dispersion or stirring dispersion to form a dispersion liquid, and pouring the dispersion liquid in the laser particle sizer to measure the particle size distribution of the aluminum aminotrimethylenephosphonate. The particle size of the aluminum aminotrimethylenephosphonate in the present invention was evaluated according to values of the D(10), D(50) and D(90) measured by the laser particle sizer.

A test method for measuring an angle of repose of the aluminum aminotrimethylenephosphonate in the present

invention is as follows:
Pouring a powder sample into a funnel so that the powder sample falls through the funnel on a round plate having a diameter r below the funnel, with the powder being piled gradually until the powder no longer reaches higher, measuring a piled height h of the powder, and calculating the angle of repose $\alpha$ according to the following formula (1):

$$tg\ \alpha = h/r\ (1).$$

A test method for measuring a bulk density of the aluminum aminotrimethylenephosphonate in the present invention is referred to GB/T 20316.2 *Determination of Bulk Density.*
A test method for measuring an infrared absorption spectrum of the aluminum aminotrimethylenephosphonate in the present invention is referred to GB/T 6040-2002 *General Rules for Infrared Analysis.*
Performance tests of a flame-retardant macromolecular material in the present invention were carried out according to the following standards:

Tensile strength: GB/T 1040-1992 *Plastics - Determination of Tensile Properties*;
Bending strength: GB/T 9341-2000 *Plastics - Determination of Flexural Properties*;
Deflection: GB/T 9341-2000 *Plastics -Determination of Flexural Properties,* Notch impact strength: GB/T 16420-1996 *Plastics - Determination of Impact Properties by Use of Small Specimens*;
Flammability: *UL94 Determination of Flammability of Plastics.*

Performance tests of a flame-retardant wood in the present invention were carried out according to the following standards:

Bonding strength: GB/T 17657-1999 *Test Methods of Evaluating the Properties of Wood-based Panels and Surface Decorated Wood-based Panels*;
Limit oxygen index: GB/T 2406-2009 *Plastics - Determination of Flammability by Oxygen Index,* and GB 50222-95 *Code for Fire Prevention in Design of Interior Decoration of Buildings* in which an oxygen index of Level B1 is more than or equal to 48%;
Smoke density: GB/T 8627-1999 *Test Method for Density of Smoke from the Burning or Decomposition of Building Materials,* in which a smoke density rating (SDR) <_ 75 is qualified.

Performance tests of a flame-retardant paper in the present invention were carried out according to the following standards:

Flammability: GB/T 14656-2009 *Test Method for Burning Behavior of Flame-retardant Paper and Board*;
Limit oxygen index: GB/T 2406-2009 *Plastics - Determination of Flammability by Oxygen Index,* and GB 50222-95 *Code for Fire Prevention in Design of Interior Decoration of Buildings* in which an oxygen index of Level B1 is more than or equal to 48%.

Example 1:

6644 g of a 45% (mass fraction) aqueous solution of aminotrimethylene phosphonic acid (10mol) was added to a reactor, and a pH value thereof was adjusted to 7 with a 40% (mass fraction) NaOH aqueous solution. The aqueous solution of aminotrimethylene phosphonic acid was stirred and heated to 90°C, and 11100 g of a 40% (mass fraction) aqueous solution of aluminum sulfate octadecanhydrate (6.667mol) was added thereto within 60 minutes to form a solid precipitate, followed by cooling, filtering, water-washing and drying. 3187 g of aluminum aminotrimethylenephosphonate was obtained with a yield of 96.3%. Distribution of the particle size ($\mu$m) of the product is as follows: D(10): 8.82; D(50): 25.75; D(90): 50.97;

Bulk density: 0.70 g/cm $^3$;
Angle of repose: 34°;
IR: 585cm $^{-1}$, 1164cm $^{-1}$, 1435cm $^{-1}$, 1651cm $^{-1}$, 3030cm $^{-1}$.

Example 2:

A pH value was adjusted to 8 with a 40% (mass fraction) KOH aqueous solution, and the rest operations were

as same as those in Example 1. 3162 g of aluminum aminotrimethylenephosphonate was obtained with a yield of 95.5%.

Distribution of the particle size (μm) of the product is as follows: D(10): 15.43; D(50): 35.51; D(90): 70.59;

Bulk density: 0.78g/cm3;
Angle of repose: 36°;
IR: 586cm $^{-1}$, 1164cm $^{-1}$, 1436cm $^{-1}$, 1650cm $^{-1}$, 3031cm $^{-1}$.

Example 3:

8048 g of a 40% (mass fraction) aqueous solution of aluminium chloride hexahydrate (13.333mol) was added within 30 minutes, and the rest operations were as same as those in Example 1. 3201 g of aluminum aminotrimethylenephosphonate was obtained with a yield of 96.7%.

Distribution of the particle size (um) of the product is as follows: D(10): 25.69; D(50): 60.34; D(90): 137.21;

Bulk density: 0.83g/cm $^3$;
Angle of repose: 39°;
IR: 590cm $^{-1}$, 1165cm $^{-1}$, 1438cm $^{-1}$, 1651cm $^{-1}$, 3030cm $^{-1}$.

Example 4:

11057 g of a 35% (mass fraction) aqueous solution of tetrasodium aminotrimethylene phosphonate (10mol) was added to a reactor, and a pH value thereof was adjusted to 9 with a 30% (mass fraction) KOH aqueous solution. The aqueous solution of tetrasodium aminotrimethylene phosphonate was stirred and heated to 90°C, and 11100 g of a 40% (mass fraction) aqueous solution of aluminum sulfate octadecanhydrate (6.667mol) was added thereto within 120 minutes. 3143 g of aluminum aminotrimethylenephosphonate was obtained with a yield of 95.0%.

Distribution of the particle size (μm) of the product is as follows: D(10): 22.12; D(50): 55.60; D(90): 110.31;

Bulk density: 0.75g/cm $^3$;
Angle of repose: 38°;
IR: 595cm $^{-1}$, 1163cm $^{-1}$, 1436cm $^{-1}$, 1650cm $^{-1}$, 3031cm $^{-1}$.

Example 5:

9800 g of a 35% (mass fraction) aqueous solution of disodium aminotrimethylene phosphonate (10mol) was added to a reactor, and a pH value thereof was adjusted to 5 with a 30% (mass fraction) NaOH aqueous solution. The aqueous solution of disodium aminotrimethylene phosphonate was stirred and heated to 90°C, and 11100 g of a 40% (mass fraction) aqueous solution of aluminum sulfate octadecanhydrate (6.667mol) was added thereto within 60 minutes to form a solid precipitate, followed by cooling, filtering, water-washing and drying. 3158 g of aluminum aminotrimethylenephosphonate was obtained with a yield of 95.4%. Distribution of the particle size (μm) of the product is as follows: D(10): 12.67; D(50): 28.82; D(90): 65.04;

Bulk density: 0.73g/cm3;
Angle of repose: 31°;
IR: 596cm $^{-1}$, 1163cm $^{-1}$, 1434cm $^{-1}$, 1650cm $^{-1}$, 3031cm $^{-1}$.

Example 6:

9171 g of a 35% (mass fraction) aqueous solution of monosodium aminotrimethylene phosphonate (10mol) was added to a reactor, and a pH value thereof was adjusted to 6 with a 30% (mass fraction) NaOH aqueous solution. The aqueous solution of monosodium aminotrimethylene phosphonate was stirred and heated to 90°C, and 11100 g of a 40% (mass fraction) aqueous solution of aluminum sulfate octadecanhydrate (6.667mol) was added thereto within 60 minutes to form a solid precipitate, followed by cooling, filtering, water-washing and drying. 3171 g of aluminum aminotrimethylenephosphonate was obtained with a yield of 95.8%.

Distribution of the particle size (μm) of the product is as follows: D(10): 8.49; D(50): 28.59; D(90): 55.31;

Bulk density: 0.71g/cm $^3$;
Angle of repose: 30°;
IR: 585cm $^{-1}$, 1161cm $^{-1}$, 1430cm $^{-1}$, 1648cm $^{-1}$, 3029cm $^{-1}$.

Example 7:

9629 g of a 35% (mass fraction) aqueous solution of monopotasium aminotrimethylene phosphonate (10mol) was added to a reactor, and a pH value thereof was adjusted to 3 with a 35% (mass fraction) KOH aqueous solution. The aqueous solution of monopotasium aminotrimethylene phosphonate was stirred and heated to 90°C, and 12504 g of a 40% (mass fraction) aqueous solution of aluminum nitrate nonahydrate (13.333mol) was added thereto within 60 minutes to form a solid precipitate, followed by cooling, filtering, water-washing and drying. 3124 g of aluminum aminotrimethylenephosphonate was obtained with a yield of 94.4%.

Distribution of the particle size (μm) of the product is as follows: D(10): 10.69; D(50): 32.28; D(90): 80.33;

Bulk density: 0.74g/cm $^3$;
Angle of repose: 32°;
IR: 588cm $^{-1}$, 1181cm $^{-1}$, 1427cm $^{-1}$, 1648cm $^{-1}$, 3030cm $^{-1}$.

Example 8:

10714 g of a 35% (mass fraction) aqueous solution of dipotasium aminotrimethylene phosphonate (10mol) was added to a reactor, and a pH value thereof was adjusted to 4 with a 35% (mass fraction) KOH aqueous solution. The aqueous solution of dipotasium aminotrimethylene phosphonate was stirred and heated to 90°C, and 12504 g of a 40% (mass fraction) aqueous solution of aluminum nitrate nonahydrate (13.333mol) was added thereto within 60 minutes to form a solid precipitate, followed by cooling, filtering, water-washing and drying. 3101 g of aluminum aminotrimethylenephosphonate was obtained with a yield of 93.7%.

Distribution of the particle size (μm) of the product is as follows: D(10): 10.95; D(50): 35.47; D(90): 85.29;

Bulk density: 0.74g/cm $^3$;
Angle of repose: 33°;
IR: 587cm $^{-1}$, 1180cm $^{-1}$, 1425cm $^{-1}$, 1650cm $^{-1}$, 3031cm $^{-1}$.

Example 9:

The aluminum aminotrimethylenephosphonate obtained in Example 1 was mixed with PBT according to a weight ratio of 35:65, and extruded through a double-screw extruder at 230°C to 260°C. A flame-retardant thermoplastic polymer material was obtained, and flammability of a specimen made thereof was determined to be Classification V-2 with UL94 burning of 3.0 mm.

Example 10:

The aluminum aminotrimethylenephosphonate obtained in Example 1 was mixed with PA66 according to a weight ratio of 35:65, and extruded through a double-screw extruder at 240°C to 270°C. A flame-retardant thermoplastic polymer material was obtained, and flammability of a specimen made thereof was determined to be Classification V-2 with UL94 burning of 3.0 mm.

Example 11:

The aluminum aminotrimethylenephosphonate obtained in Example 1 was mixed with PP according to a weight ratio of 35:65, and extruded through a double-screw extruder at 170°C to 200°C. A flame-retardant thermoplastic polymer material was obtained, and flammability of a specimen made thereof was determined to be Classification V-2 with UL94 burning of 3.0 mm.

Example 12:

The aluminum aminotrimethylenephosphonate obtained in Example 1 was mixed with aluminum diethylphosphinate, PBT and glass fibers according to a weight ratio of 6:10:59:25, and extruded through a double-screw extruder at 230°C to 260°C. A flame-retardant thermoplastic polymer material was obtained. Example 13:
The aluminum aminotrimethylenephosphonate obtained in Example 2 was mixed with aluminum diethylphosphinate, PBT and glass fibers according to a weight ratio of 8:8:59:25, and extruded through a double-screw extruder at 230°C to 260°C. A flame-retardant thermoplastic polymer material was obtained.

Example 14:

The aluminum aminotrimethylenephosphonate obtained in Example 3 was mixed with aluminum diethylphosphinate, PBT and glass fibers according to a weight ratio of 10:6:59:25, and extruded through a double-screw extruder at 230°C to 260°C. A flame-retardant thermoplastic polymer material was obtained.

Example 15:

The aluminum aminotrimethylenephosphonate obtained in Example 4 was mixed with aluminum hypophosphite, PBT and glass fibers according to a weight ratio of 6:14:55:25, and extruded through a double-screw extruder at 230°C to 260°C. A flame-retardant thermoplastic polymer material was obtained.

Example 16:

The aluminum aminotrimethylenephosphonate obtained in Example 5 was mixed with aluminum hypophosphite, PBT and glass fibers according to a weight ratio of 10:10:55:25, and extruded through a double-screw extruder at 230°C to 260°C. A flame-retardant thermoplastic polymer material was obtained.

Example 17:

The aluminum aminotrimethylenephosphonate obtained in Example 6 was mixed with aluminum hypophosphite, PBT and glass fibers according to a weight ratio of 14:6:55:25, and extruded through a double-screw extruder at 230°C to 260°C. A flame-retardant thermoplastic polymer material was obtained.

Comparative Example 1:

Aluminum diethylphosphinate, PBT and glass fibers were mixed according to a weight ratio of 16:59:25, and extruded through a double-screw extruder at 230°C to 260°C. A flame-retardant thermoplastic polymer material was obtained.

Comparative Example 2:

Aluminum hypophosphite, PBT and glass fibers were mixed according to a weight ratio of 20:55:25, and extruded through a double-screw extruder at 230°C to 260°C. A flame-retardant thermoplastic polymer material was obtained.

Specimens of the flame-retardant polymer materials obtained in Examples 12-17 and Comparative Example 1-2 were made to determine their flammability and mechanical properties, and the test results are shown as Table 1:

Table 1 Parameters of flammability and mechanical properties of the PBT flame-retardant thermoplastic polymer materials

| | GB Tensile strength (MPa) | GB Bending strength (MPa) | Deflection (mm) | UL94 burning of 1.6 mm | UL94 burning of 3.0 mm |
|---|---|---|---|---|---|
| Example 12 | 116 | 175 | 4.1 | V-0 | V-0 |
| Example 13 | 113 | 173 | 4.0 | V-2 | V-1 |
| Example 14 | 115 | 174 | 4.0 | Non | V-1 |
| Example 15 | 105 | 161 | 3.6 | V-0 | V-0 |
| Example 16 | 101 | 157 | 3.5 | V-2 | V-1 |
| Example 17 | 103 | 155 | 3.5 | Non | V-1 |
| Comparative Example 1 | 125 | 185 | 4.4 | Non | Non |
| Comparative Example 2 | 121 | 179 | 4.2 | Non | V-2 |

Example 18:

The aluminum aminotrimethylenephosphonate obtained in Example 7 was mixed with aluminum dipropylphosphinate, PA66 and glass fibers according to a weight ratio of 6:14:55:25, and extruded through a double-screw extruder at 240°C to 270°C. A flame-retardant thermoplastic polymer material was obtained.

Example 19:

The aluminum aminotrimethylenephosphonate obtained in Example 8 was mixed with aluminum diethylphosphinate, PA66 and glass fibers according to a weight ratio of 10:10:55:25, and extruded through a double-screw extruder at 240°C to 270°C. A flame-retardant thermoplastic polymer material was obtained.

Example 20:

The aluminum aminotrimethylenephosphonate obtained in Example 1 was mixed with aluminum hypophosphite, PA66 and glass fibers according to a weight ratio of 14:6:55:25, and extruded through a double-screw extruder at 240°C to 270°C. A flame-retardant thermoplastic polymer material was obtained.

Comparative Example 3:

Aluminum dipropylphosphinate, PA66 and glass fibers were mixed according to a weight ratio of 20:55:25, and extruded through a double-screw extruder at 240°C to 270°C. A flame-retardant thermoplastic polymer material was obtained. Specimens of the flame-retardant polymer materials obtained in Examples 18-20 and Comparative Example 3 were made to determine their flammability and mechanical properties, and the test results are shown as Table 2:

Table 2 Parameters of flammability and mechanical properties of the PA66 flame-retardant thermoplastic polymer materials

| | GB Tensile strength (MPa) | GB Bending strength (MPa) | Deflection (mm) | UL94 burning of 1.6 mm | UL94 burning of 3.0 mm |
|---|---|---|---|---|---|
| Example 18 | 98 | 156 | 5.0 | V-0 | V-0 |
| Example 19 | 115 | 175 | 5.3 | V-2 | V-1 |
| Example 20 | 112 | 173 | 5.3 | Non | V-1 |
| Comparative Example 3 | 120 | 181 | 5.6 | Non | V-2 |

Example 21:

The aluminum aminotrimethylenephosphonate obtained in Example 2 was mixed with piperazine pyrophosphate and PP according to a weight ratio of 15:15:70, and extruded through a double-screw extruder at 170°C to 200°C. A flame-retardant thermoplastic polymer material was obtained.

Example 22:

The aluminum aminotrimethylenephosphonate obtained in Example 2 was mixed with piperazine polyphosphate and PP according to a weight ratio of 10:20:70, and extruded through a double-screw extruder at 170°C to 200°C. A flame-retardant thermoplastic polymer material was obtained.

Comparative Example 4:

Piperazine pyrophosphate and PP were mixed according to a weight ratio of 30:70, and extruded through a double-screw extruder at 170°C to 200°C. A flame-retardant thermoplastic polymer material was obtained.

Specimens of the flame-retardant polymer materials obtained in Examples 21-22 and Comparative Example 4 were made to determine their flammability and mechanical properties, and the test results are shown as Table 3:

Table 3 Parameters of flammability and mechanical properties of the flame-retardant thermoplastic polymer materials

| | GB Tensile strength (MPa) | GB Bending strength (MPa) | Deflection (mm) | UL94 burning of 1.6 mm | UL94 burning of 3.0 mm |
|---|---|---|---|---|---|
| Example 21 | 14.9 | 24.7 | 3.1 | V-2 | V-1 |
| Example 22 | 15.1 | 25.4 | 3.2 | V-2 | V-1 |
| Example 4 | 21.1 | 32.8 | 4.3 | Non | V-2 |

Example 23:

Flame-retardant wood was prepared from the aluminum aminotrimethylenephosphonate obtained in Examples 1-8, ammonium polyphosphate, spruce wood shavings and shaving boards with an adhesive according to a weight ratio of 8:7:80:5. Comparative Example 5 represents the wood without adding a flame retardant. Performances of the wood were determined and test results are shown in Table 4:

Table 4 Parameters of performances of the flame-retardant wood

| | Bonding strength (MPa) | Limit oxygen index (%) | Smoke density rating (SDR) |
|---|---|---|---|
| Example 1 | 1.01 | 50.4 | 38.64 |
| Example 2 | 1.10 | 51.2 | 39.12 |
| Example 3 | 1.05 | 50.2 | 36.17 |
| Example 4 | 1.08 | 53.9 | 38.21 |
| Example 5 | 1.00 | 51.3 | 39.17 |
| Example 6 | 1.05 | 51.1 | 37.83 |
| Example 7 | 1.03 | 52.7 | 36.9 |
| Example 8 | 1.06 | 52.5 | 38.46 |
| Comparative Example 5 | 1.21 | 26.1 | 76.02 |

Example 24:

The aluminum aminotrimethylenephosphonate obtained in Examples 1-8, white carbon black, calcium stearate, sodium carboxymethyl cellulose and water were mixed according to a weight ratio of 18:7:4:1:70 and stirred evenly to obtain a flame-retardant liquid. The flame-retardant liquid was coated on a single side of a paper sheet (basis weight: 70 g/$m^2$) via a coating machine, and flame-retardant paper was obtained through drying. Comparative Example 6 represents the paper without adding a flame retardant. Flammability of the paper was determined and test results are shown in Table 5:

Table 5 Parameters of performances of the flame-retardant paper

| | Afterflame time (s) | Afterglow time (s) | Char length (mm) | Limit oxygen index (%) |
|---|---|---|---|---|
| Technical Indicator | ≤5 | ≤60 | ≤115 | ≥32 |
| Example 1 | 0 | 1 | 18 | 36 |
| Example 2 | 0 | 2 | 19 | 34 |
| Example 3 | 0 | 1 | 19 | 34 |
| Example 4 | 0 | 1 | 18 | 36 |
| Example 5 | 0 | 2 | 20 | 33 |
| Example 6 | 0 | 1 | 21 | 35 |
| Example 7 | 0 | 2 | 18 | 34 |
| Example 8 | 0 | 2 | 20 | 36 |

(continued)

| | Afterflame time (s) | Afterglow time (s) | Char length (mm) | Limit oxygen index (%) |
|---|---|---|---|---|
| Comparative Example 6 | 73 | 140 | Completely burned | 21 |

**Claims**

**1.** An aluminum aminotrimethylenephosphonate, having a structure shown as the formula (I):

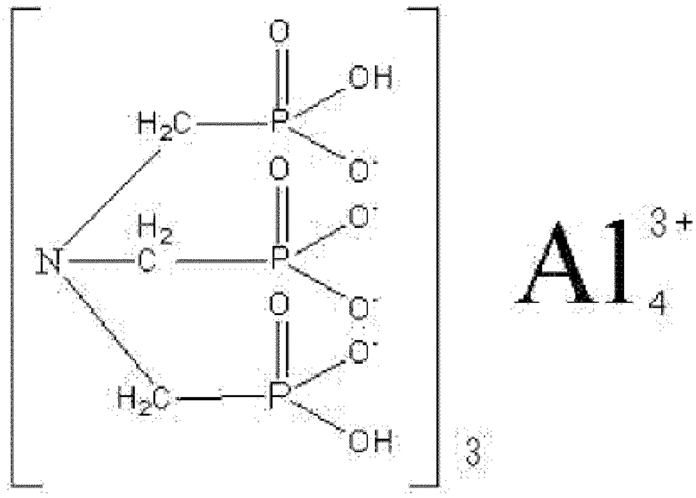

(I)

,

wherein:

the aluminum aminotrimethylenephosphonate has a particle size (D50) of 5 μm - 100 pm,
the aluminum aminotrimethylenephosphonate has a bulk density of 0.4 g/cm$^3$ - 0.9 g/cm$^3$, and
the aluminum aminotrimethylenephosphonate has an angle of repose of 25° - 45.

**2.** A preparation method for the aluminum aminotrimethylenephosphonate according to claim 1, comprising the following steps:

a) adjusting a pH value of aminotrimethylene phosphonic acid or of an aqueous solution of an acidic salt of the aminotrimethylene phosphonic acid to 3 - 9 with an aqueous solution of an alkali compound, to obtain an alkali metal salt solution of the aminotrimethylene phosphonic acid;
b) performing a reaction of the alkali metal salt solution of aminotrimethylene phosphonic acid with an aluminum metal compound or an aqueous solution thereof to obtain aluminum aminotrimethylenephosphonate;

wherein in step a), the alkali compound is sodium hydroxide, potassium hydroxide, sodium carbonate, potassium carbonate, sodium acetate or potassium acetate; in step a), the acidic salt of the aminotrimethylene phosphonic acid is monosodium aminotrimethylenephosphonate, disodium aminotrimethylenephosphonate, trisodim aminotrimethylenephosphonate, tetrasodium aminotrimethylenephosphonate, monopotasium aminotrimethylenephosphonate, dipotasium aminotrimethylenephosphonate, tripotasium aminotrimethylenephosphonate, tetrapotasium aminotrimethylenephosphonate, or any combinations thereof and in step b), the aluminum metal compound is aluminum sulfate, aluminum chloride, aluminum acetate, aluminum nitrate, aluminum hydroxide, aluminum oxide, or any combinations thereof.

**3.** Use of the aluminum aminotrimethylenephosphonate according to claim 1 or obtainable using the method according to claim 2 as a flame retardant in macromolecular materials, wood or paper.

**4.** A flame retardant composition, comprising the aluminum aminotrimethylenephosphonate according to claim 1 or obtainable using the method according to claim 2.

5. The flame retardant composition according to claim 4, wherein the flame retardant composition comprises 10% - 99.9% by weight of the aluminum aminotrimethylenephosphonate according to claim 1 or obtainable using the method according to claim 2 and 0.1% - 90% by weight of at least one additive, preferably 20% - 70% by weight of the aluminum aminotrimethylenephosphonate according to claim 1 or obtainable using the method according to claim 2 and 30% - 80% by weight of at least one additive.

6. The flame retardant composition according to claim 5, wherein the additive is selected from one or more of aluminum diethylphosphinate, aluminum dipropylphosphinate, aluminum dibutylphosphinate, aluminum ethylbutylphosphinate and aluminum hypophosphite.

7. The flame retardant composition according to claim 5 or 6, wherein the additive is selected from one or more of piperazine pyrophosphate, piperazine polyphosphate, melamine pyrophosphate, melamine polyphosphate, melamine cyanurate, guanidine and dicyandiamide.

8. A flame-retardant macromolecular material, comprising the flame retardant composition according to any of claims 4 - 7.

9. The flame-retardant macromolecular material according to claim 8, wherein the flame-retardant macromolecular material comprises 1% - 50% by weight of the flame retardant composition according to any of claims 12 - 16, 30% - 99% by weight of a polymer or a mixture thereof, 0% - 60% by weight of a promoter, and 0% - 60% by weight of a filler, preferably 5% - 30% by weight of the flame retardant composition according to any of claims 12 - 16, 40% - 95% by weight of the polymer or the mixture thereof, 0% - 40% by weight of the promoter, and 0% - 40% by weight of the filler.

10. The flame-retardant macromolecular material according to claim 9, wherein the polymer is selected from one or more of a thermoplastic polymer and/or a thermoset polymer.

11. The flame-retardant macromolecular material according to claim 9 or 10, wherein the thermoplastic polymer is a polyester, a polyamide or a polyolefin, preferably nylon 66, polybutylene terephthalate (PBT) or polypropylene (PP).

**Patentansprüche**

1. Aluminiumaminotrimethylenphosphonat, mit einer Struktur, die als die Formel (I) dargestellt ist:

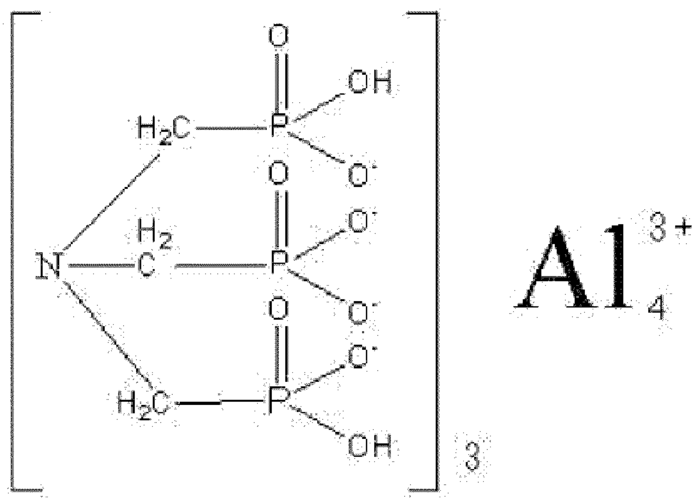

(I)

,

wobei:

das Aluminiumaminotrimethylenphosphonat eine Teilchengröße (D50) von 5 µm - 100 um hat,
das Aluminiumaminotrimethylenphosphonat eine Schüttdichte von 0,4 g/cm$^3$ - 0,9 g/cm$^3$ hat, und
das Aluminiumaminotrimethylenphosphonat einen Schüttwinkel von 25° - 45° hat.

2. Herstellungsverfahren für das Aluminiumaminotrimethylenphosphonat gemäß Anspruch 1, umfassend die folgenden Schritte:

a) Einstellen eines pH-Wertes der Aminotrimethylenphosphonsäure oder von einer wässrigen Lösung eines sauren Salzes der Aminotrimethylenphosphonsäure auf 3 - 9 mit einer wässrigen Lösung einer Alkaliverbindung, um eine Alkalimetallsalzlösung der Aminotrimethylenphosphonsäure zu erhalten;
b) Durchführung einer Reaktion der Alkalimetallsalzlösung der Aminotrimethylenphosphonsäure mit einer Aluminiummetallverbindung oder einer wässrigen Lösung davon, um Aluminiumaminotrimethylenphosphonat zu erhalten;

wobei in Schritt a) die Alkaliverbindung Natriumhydroxid, Kaliumhydroxid, Natriumcarbonat, Kaliumcarbonat, Natriumacetat oder Kaliumacetat ist; in Schritt a) das saure Salz der Aminotrimethylenphosphonsäure Mononatrium-Aminotrimethylenphosphonat, Dinatrium-Aminotrimethylenphosphonat, Trinatrium-Aminotrimethylenphosphonat, Tetranatrium-Aminotrimethylenphosphonat, Monokalium-Aminotrimethylenphosphonat, Dikalium-Aminotrimethylenphosphonat, Trikalium-Aminotrimethylenphosphonat, Tetrakalium-Aminotrimethylenphosphonat oder beliebige Kombinationen davon ist; und in Schritt b) die Aluminiummetallverbindung Aluminiumsulfat, Aluminiumchlorid, Aluminiumacetat, Aluminiumnitrat, Aluminiumhydroxid, Aluminiumoxid oder beliebige Kombinationen davon ist.

3. Verwendung des Aluminiumaminotrimethylenphosphonas gemäß Anspruch 1 oder erhältlich gemäß dem Verfahren gemäß Anspruch 2 als flammenhemmendes Mittel in makromolekularen Materialien, Holz oder Papier.

4. Flammenhemmende Zusammensetzung, die Aluminiumaminotrimethylenphosphonat gemäß Anspruch 1 aufweist oder gemäß dem Verfahren gemäß Anspruch 2 erhältlich ist.

5. Flammenhemmende Zusammensetzung gemäß Anspruch 4, wobei die flammenhemmende Zusammensetzung 10 - 99,9 Gew.-% des Aluminiumaminotrimethylenphosphonats gemäß Anspruch 1 oder des gemäß dem Verfahren nach Anspruch 2 erhältlichen Aluminiumaminotrimethylenphosphonats und 0,1 - 90 Gew.-% mindestens eines Additivs, vorzugsweise 20 - 70 Gew.-% des Aluminiumaminotrimethylenphosphonats nach Anspruch 1 oder des gemäß dem Verfahren nach Anspruch 2 erhältlichen Aluminiumaminotrimethylenphosphonats und 30 - 80 Gew.-% mindestens eines Additivs, aufweist.

6. Flammenhemmende Zusammensetzung gemäß Anspruch 5, wobei das Additiv ausgewählt ist aus einem oder mehreren von Aluminiumdiethylphosphinat, Aluminiumdipropylphosphinat, Aluminiumdibutylphosphinat, Aluminiumethylbutylphosphinat und Aluminiumhypophosphit.

7. Flammenhemmende Zusammensetzung gemäß Anspruch 5 oder 6, wobei das Additiv ausgewählt ist aus einem oder mehreren von Piperazinpyrophosphat, Piperazinpolyphosphat, Melaminpyrophosphat, Melaminpolyphosphat, Melamincyanurat, Guanidin und Dicyandiamid.

8. Flammenhemmendes makromolekulares Material, umfassend die flammenhemmende Zusammensetzung gemäß einem der Ansprüche 4 bis 7.

9. Flammenhemmendes makromolekulares Material gemäß Anspruch 8, wobei das flammenhemmende makromolekulare Material 1 - 50 Gew.-% der flammenhemmenden Zusammensetzung gemäß einem der Ansprüche 12 - 16, 30 - 99 Gew.-% eines Polymers oder einer Mischung davon, 0 - 60 Gew.-% eines Promotors und 0 - 60 Gew.-% eines Füllstoffs, vorzugsweise 5 - 30 Gew.-% der flammenhemmenden Zusammensetzung gemäß einem der Ansprüche 12 - 16, 40 - 95 Gew.-% des Polymers oder der Mischung davon, 0 - 40 Gew.-% des Promotors und 0 - 40 Gew.-% des Füllstoffs, umfasst.

10. Flammenhemmendes makromolekulares Material gemäß Anspruch 9, wobei das Polymer aus einem oder mehreren thermoplastischen Polymeren und/oder duroplastischen Polymeren ausgewählt ist.

11. Flammenhemmendes makromolekulares Material gemäß Anspruch 9 oder 10, wobei das thermoplastische Polymer ein Polyester, ein Polyamid oder ein Polyolefin, vorzugsweise Nylon 66, Polybutylenterephthalat (PBT) oder Polypropylen (PP) ist.

**Revendications**

**1.** Aminotriméthylènephosphonate d'aluminium, ayant une structure représentée par la formule (I) :

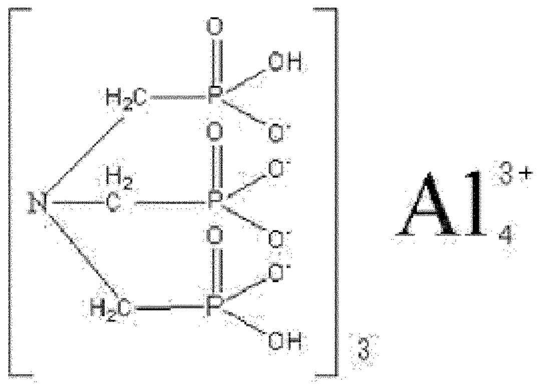

(I)

,

dans laquelle :

l'aminotriméthylènephosphonate d'aluminium a une taille de particules (D50) comprise entre 5 μm et 100 μm,
l'aminotriméthylènephosphonate d'aluminium a une masse volumique en vrac comprise entre 0,4 g/cm$^3$ et 0,9 g/cm$^3$, et
l'aminotriméthylènephosphonate d'aluminium a un angle de repos compris entre 25° et 45°.

**2.** Procédé de préparation de l'aminotriméthylènephosphonate d'aluminium selon la revendication 1, comprenant les étapes suivantes consistant à :

a) régler une valeur de pH d'un acide aminotriméthylène phosphonique ou d'une solution aqueuse d'un sel acide de l'acide aminotriméthylène phosphonique à une valeur comprise entre 3 et 9 avec une solution aqueuse d'un composé alcalin, pour obtenir une solution de sel métallique alcalin de l'acide aminotriméthylène phosphonique ;
b) faire réagir la solution de sel métallique alcalin d'acide aminotriméthylène phosphonique avec un composé métallique d'aluminium ou avec une solution aqueuse de ce dernier pour obtenir de l'aminotriméthylènephosphonate d'aluminium ;
dans lequel, à une étape a), le composé alcalin est de l'hydroxyde de sodium, de l'hydroxyde de potassium, du carbonate de sodium, du carbonate de potassium, de l'acétate de sodium ou de l'acétate de potassium ; à l'étape a), le sel acide de l'acide aminotriméthylène phosphonique est de l'aminotriméthylènephosphonate de monosodium, de l'aminotriméthylènephosphonate de disodium, de l'aminotriméthylènephosphonate de trisodium, de l'aminotriméthylènephosphonate de tétrasodium, de l'aminotriméthylènephosphonate de monopotassium, de l'aminotriméthylènephosphonate de dipotassium, de l'aminotriméthylènephosphonate de tripotassium, de l'aminotriméthylènephosphonate de tétrapotassium, ou n'importe laquelle de leurs combinaisons ; et, à une étape b), le composé métallique d'aluminium est du sulfate d'aluminium, du chlorure d'aluminium, de l'acétate d'aluminium, du nitrate d'aluminium, de l'hydroxyde d'aluminium, de l'oxyde d'aluminium, ou n'importe laquelle de leurs combinaisons.

**3.** Utilisation de l'aminotriméthylènephosphonate d'aluminium selon la revendication 1 ou pouvant être obtenu en utilisant le procédé selon la revendication 2 en tant qu'agent ignifuge dans des matériaux macromoléculaires, du bois ou du papier.

**4.** Composition ignifuge, comprenant l'aminotriméthylènephosphonate d'aluminium selon la revendication 1 ou pouvant être obtenu en utilisant le procédé selon la revendication 2.

**5.** Composition ignifuge selon la revendication 4, dans laquelle la composition ignifuge comprend de 10 % à 99,9 % en poids de l'aminotriméthylènephosphonate d'aluminium selon la revendication 1 ou pouvant être obtenu en utilisant le procédé selon la revendication 2 et de 0,1 % à 90 % en poids d'au moins un additif, de préférence de 20 % à 70 % en poids de l'aminotriméthylènephosphonate d'aluminium selon la revendication 1 ou pouvant être obtenu en utilisant le procédé selon la revendication 2 et de 30 % à 80 % en poids d'au moins un additif.

6. Composition ignifuge selon la revendication 5, dans laquelle l'additif est sélectionné à partir d'un ou de plusieurs composés parmi du diéthylphosphinate d'aluminium, du dipropylphosphinate d'aluminium, du dibutylphosphinate d'aluminium, de l'éthylbutylphosphinate d'aluminium et de l'hydrophosphite d'aluminium.

7. Composition ignifuge selon la revendication 5 ou la revendication 6, dans laquelle l'additif est sélectionné à partir d'un ou de plusieurs composés parmi du pyrophosphate de pipérazine, du polyphosphate de pipérazine, du pyrophosphate de mélamine, du polyphosphate de mélamine, du cyanurate de mélamine, de la guanidine et du dicyandiamide.

8. Matériau macromoléculaire ignifuge, comprenant la composition ignifuge selon l'une quelconque des revendications 4 à 7.

9. Matériau macromoléculaire ignifuge selon la revendication 8, dans lequel le matériau macromoléculaire ignifuge comprend de 1 % à 50 % en poids de la composition ignifuge selon l'une quelconque des revendications 12 à 16, de 30 % à 99 % en poids d'un polymère ou d'un mélange de ce dernier, de 0 % à 60 % en poids d'un promoteur, et de 0 % à 60 % en poids d'une charge, de préférence de 5 % à 30 % en poids de la composition ignifuge selon l'une quelconque des revendications 12 à 16, de 40 % à 95 % en poids du polymère ou de son mélange, de 0 % à 40 % en poids du promoteur et de 0 % à 40 % en poids de la charge.

10. Matériau macromoléculaire ignifuge selon la revendication 9, dans lequel le polymère est sélectionné à partir d'un ou de plusieurs d'un polymère thermoplastique et/ou d'un polymère thermodurcissable.

11. Matériau macromoléculaire ignifuge selon la revendication 9 ou la revendication 10, dans lequel le polymère thermoplastique est un polyester, un polyamide ou une polyoléfine, de préférence du nylon 66, du polybutylène téréphtalate (PBT) ou du polypropylène (PP).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1660857 B
- CN 104497041 A
- CN 106632468 A
- RU 2477734 C1